# EUROPEAN PATENT SPECIFICATION

(11) **EP 1 747 870 B1**
(45) Date of publication and mention of the grant of the patent: **27.08.2008**
(21) Application number: 05425541.9
(22) Date of filing: 25.07.2005
(51) Int. Cl.: B29B 17/02

(54) **Method for recycling plastic material**
Verfahren zum Wiederverwenden von Kunststoff
Procédé pour le recyclage de matériaux plastiques

(43) Date of publication of application: 31.01.2007
(73) Proprietor: MERLONI PROGETTI S.p.A., 20151 Milano (IT)
(72) Inventor: Caron, Remigio, 37050 Angiari (Verona) (IT)
(74) Representative: Long, Giorgio

(56) References cited:
- DE-A1- 4 106 510
- DE-A1- 4 130 645
- US-A- 5 074 477
- US-A1- 2003 029 562
- US-B1- 6 460 788

## Description

The present invention relates to a method for recycling plastic material, particularly plastic material combined with materials of a different nature, such as the one deriving from the recycling either of household appliances or other composite products.

With the term "composite product" is meant a complex product containing materials of a different nature, such as for example plastic materials of various type, metals or other non-metallic materials such as glass, wood, etc. With the term "composite material", such as employed in the continuation of the present specification, is meant the mixture of materials of a various nature which derive from the grinding of said composite products, containing discrete pieces of a single material, as well as pieces consisting of two or more materials (metal-plastic, plastic-foamed plastic, etc.).

The discarded material recycling industry has acquired an ever-increasing importance essentially for environmental reasons. In fact, it is advantageous to reduce the amount of material being either conveyed to the waste dump sites, which have to be included within limited surfaces, or the incinerators, which are often subject to criticism due to their polluting potential deriving from the fumes flowing from the system which contain substances harmful to health, if they are not damped.

Beyond the environmental reasons, solid economical reasons inducing to reclaim the highest percentage possible of the discarded materials also exist. In fact, waste disposal represents a high cost for society. This cost can be at least partially recovered if the materials to be disposed of may find an economically advantageous use. In this sense, the waste incineration leads to an energy recovery in terms of heat (the so-called "heat-utilization") which can be used either for the domestic heating or for generating electric energy even for industrial purposes.

On the other hand, with regard to the material recovery, these materials may either be recirculated together with the blank material or be employed for applications in which a high qualitative standard (either charge materials or fillers or materials for manufacturing poor products) is not required, if they are of a lower quality.

A different examination is required for the recycling either of household appliances or complex products in general, such as refrigerators, microwave ovens, air-conditioners, computers, telephones and other electronic materials. In fact, these products include metal parts of various nature (iron, steel, nonferrous metals such as aluminium and copper), different plastic materials (foamed polyurethanes, polystyrene, ABS, etc.) and sometimes glass and wood. In that case, it is advantageous to separate the different materials from one another so as to head the latter to a reuse thereof and reduce the volume of waste products to be conveyed either to the waste dump sites or the heat-utilization, if possible, to a minimum.

Therefore, the technical efforts which have been carried out in the field are aimed at designing recycling processes which allow the single materials to be high-throughput separated from one another. Particularly, it is important that the different plastic materials are efficiently separated from one another, by selecting on the one hand the materials difficult to be recycled (such as the foamed polyurethane and the foamed plastics in general) which will be destined either to the waste dump site or the incineration, and on the other hand the different plastic materials which have higher potentialities to be reused. Moreover, an ideal recycling system will also require low initial and management costs, because of the low added value of the treated products.

A limit which exists in the systems of this type currently working lies in the difficulty of isolating high-purity recycled materials. If the purity is not adequate, the reuse of the material is limited to the poorer applications and the added value is minimum.

Recycling processes from the prior-art are disclosed in US-B-6460788, US-A-5074477 and DE-A-4106510.

In this sense, a particularly problematic case lies in the recycling of refrigerators. These products include both metallic (particularly iron, steel, copper, aluminium) materials and plastic materials of a various nature. A predominant part in terms of volume among the plastic materials is the foamed polyurethane (used for the insulation), but considerable amounts by weight of other materials capable to be recovered, such as for example polystyrene, are also present. However, a problem connected with the recovery of these materials is the fact that they are contaminated by tacky residues, because the refrigerator manufacturers spread suitable adhesives over the polystyrene sheets in order to make the assembling of the different parts easier. These tacky residues are difficult to be removed and are one of the main contaminants of the recovery polystyrene, which prevents the latter from being reused for high-quality applications.

Therefore, the problem at the heart of the present invention is to provide a method for carrying out the same which enable the recovery of the materials being present in a complex product, particularly of the plastic materials, with high purity and throughput.

This problem is solved by a method for carrying out the same, such as defined in the annexed claims.

Further characteristics and advantages of the present invention will be better understood from the description of some exemplary embodiments, which is given herein below by way of indicative and non-limiting example, with reference to the following figures:
Figure 1 shows a block diagram of the cleaning step of the plastic material according to the method of the invention;
Figure 2 shows a block diagram of the washing step of the plastic material according to the method of the invention;
Figure 3 shows a block diagram of the isolating and purification steps of the plastic material according to the method of the invention;
Figure 4 shows a schematic view of the system employed in the recovery stage and the first demetallizing stage according to the method of the present invention;
Figure 5 shows a simplified perspective view of the equipments employed in the second demetallizing stage in accordance with the invention;
Figure 6 shows a partially sectional perspective view of the hammer mill according to the invention;
Figure 7 shows a sectional side view of the centrifugal means of the composite material according to the invention;
Figure 8 shows a schematic perspective view of the centrifugal stirring means according to the invention;
Figure 9 shows a perspective view of a detail from Figure 8.

The method of the invention provides a grinding step of the composite material, followed by a separating step of the recovery plastic material from the other materials and the waste products.

With the term "recovery plastic material" is meant the fraction of plastic material which is isolated during the process in order to be reused, unlike the discarded plastic material (such as for example foamed polyurethane) which is conveyed either to the waste dump site or the inceneration instead.

Following the separating step, the recovery plastic material is conveyed to a cleaning step, in which said material is cleaned by removing the residues either of discarded materials or non-plastic materials in general, as well as the tacky residues.

The cleaning step is followed by a water washing step in order to move away the last residues of the discarded materials, usually present either in the form of dust or in a very small size.

The last two steps of the method are the isolating step of the plastic material being found in a larger amount from the other possible recovery materials and the surface purification step thereof for obtaining the final recovery plastic material, ready for the reuse.

The final recovery plastic material will be different according to the different origin of the initial composite material. For example, in the case of the recycling of composite material deriving from refrigerators, the recovery plastic material will be polystyrene. On the contrary, in the case of a composite material deriving from a computer or a telephone apparatus, the recovery plastic material will be usually ABS.

In any case, the main object of the present invention is having obtained the recovery plastic material with a high purity in accordance with the best qualitative standards.

### Grinding step

The composite material to be used in the recycling method being the object of the present invention is a ground material preferably having a size of 35-40 mm which is as homogeneous as possible. This size is the one which ensures the highest yields in the recovering of the materials. However, the use of a composite material either with a bigger or a smaller size is not excluded, with the warning that a too big size would make the separating operations very difficult and could cause serious damages to the equipments.

The grinding step can be carried out by means of equipments of a known type. First of all, the composite product will be separated from parts containing toxicants/pollutants, such as (motor) oil or gases of a various nature like coolant gases (refrigerator or air-conditioner heat exchangers). Therefore, the casing of the composite product will be introduced into the mill, from which the composite material will flow in ground size, in the desired size. The size may be changed by acting on the mill speed and grinding time and by placing a netting-screen with holes of the desired size at the mill exhaust opening.

In the case of the grinding of casings of refrigerators or the like, a considerable amount of expansion gas being used for producing foamed material and absorbed thereinto (typically, saturated hydrocarbons such as pentane or fluorinated hydrocarbons) will be released during the grinding step. In this case, a vent for these gases and a collection thereof in a suitable disposal station, preferably in the form of condensate, will be then required to be provided.

### Separating step

The separating step allows both the non-plastic materials and the synthetic discarded materials to be moved away from the recovery plastic material. In the case of refrigerator recycling, these synthetic discarded materials consist predominantly of foamed polyurethane (PUR).

The ground composite material is deposited on handling means, particularly a conveyor belt, and is subjected to a de-ironing stage, in which the composite material is caused to flow on a slightly sloping vibrating table in order to be uniformly distributed, and the iron is then moved away by magnetic attraction (electromagnet), thus falling onto a conveyor being transversal to the first one which conveys it to a recovery container. This operation as well as the equipment for carrying out the same are fully conventional and hence they will not be described in greater detail.

Following the de-ironing, the composite material will include synthetic discarded materials (PUR), various metals (aluminium, copper, brass, steel) and other inert materials (wood, glass, etc.), together with the recovery plastic materials. The composite material is then subjected to a draw in stage.

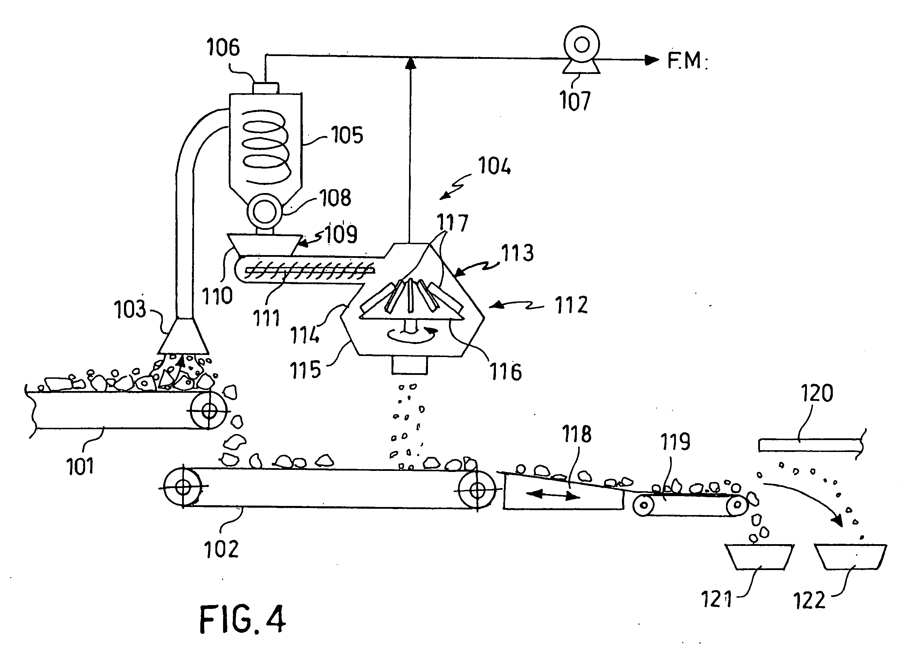

Such as shown in figure 4, the handling means 101 of the composite material end near second handling means 102, also in this case preferably a conveyor belt that is located at the lower side of the first. Some drawing means 103 intented to draw in by suction the material having a lower specific weight, significantly the PUR, are placed in a position overhanging the ending part of the first handling means 101. However, small amounts of metallic material (aluminium sheets, little slugs of copper) and small-size recovery plastic material are also drawn in together with the PUR. Therefore, in order not to waste these materials among the discarded material, the preferred embodiment shown in figure 4 provides that the material drawn in by the means 103 is conveyed to a recovery stage being carried out in a recovery station 104. The recovery station 104 comprises a cyclone 105, consisting of a cylindrical body ending with a conical bottom at the lower side thereof. The cyclone 105 comprises an aperture 106 in flow communication with intake means 107 at the upper side thereof. These intake means 107 create a suction pressure inside the cyclone 105 which allows the material to be drawn in by the drawing means 103. The drawing means 103 are connected to a pipeline opening on the upper portion of the cylindrical body of the cyclone 105, so that the drawn-in material is subjected to a turbulent circular motion within the same cyclone which causes the crumbling of the PUR for substantially forming a dust which is drawn in by the means 107, whereas the dragged plastic and metallic material, being heavier, is collected in the lower cone-shaped portion of the cyclone 105, from which it is transferred to the loading means 109, by means of valve means 108.

The valve means 108 preferably consist of a star valve of a known type, allowing the continuous discharge of the material without putting the cyclone 105 in flow communication with the external environment and hence without drawing in air from the outside.

The loading means 109 preferably comprise a hopper 110 arranged on a scroll 111. These loading means 109 open on the upper portion of a suitable centrifugal separator 112 allowing either the PUR residues or other light material to be removed from the drawn-in material.

The centrifugal separator 112 comprises a cone-shaped body 113 consisting of an upper portion 114 for the treatment, being tapered upwards, and a lower portion 115 for the collection, being tapered downwards, so that the bases of the two cones match. The upper portion 114 comprises an aperture near the top thereof which is in flow communication with the intake means 107, by means a suitable pipeline. On the contrary, the lower portion 115 comprises an exhaust opening adjusted by suitable valve means (not shown), preferably a star valve.

A rotor 116 is rotatably supported in a coaxial position inside the cone-shaped body 113, also being of a cone shape, but having a vertex angle which is higher than the one of the upper portion of the cone-shaped body 113. Blades 117 are arranged along the surface of the rotor 116. The rotor 116 is moved by a suitable motorization (not shown) and may be caused to slide in the londitudinal direction, along the axis on which it is pivoted, so as to adjust the gap between the cone-shaped body 113 and the rotor 116, at the connecting zone between the upper portion 114 for the treatment and the lower portion 115 for the collection, as well as the distance between the blades 117 and the inner wall of the cone-shaped body 113. This adjustment, which is made possible by the higher tilt of the cone of the rotor 116 relative to the cone-shaped body 113, will be carried out as a function of the size of the drawn-in material. For a small size, as will be usually present in this processing step in which only the smallest pieces of the ground product are drawn in, it will be advantageous to adjust this gap to a dimension which is lower than the case where the treated material has a bigger size. In the different cases, the optimum gap will be determined by those skilled in the field each time, by means of attempts.

The operation mode of the centrifugal separator 112 is as follows. The intake means 107 give rise to a bottom-up air current within the cone-shaped body 113. At the same time, the rotor 116, by rotating in whirls (the number of revolutions will usually range between 50 and 100 revolutions per minute), will cause the material to suffer a turbulent, circular rotary motion, which causes a continuous friction of the material pieces among one another, against the blades 117 and against the walls of the cone-shaped body 113. This friction operation effectively separates the PUR and other synthetic discarded material being adhered on the material to be recovered. The thus formed dusts are then drawn in by the intake means 107, whereas the material in pieces, being heavier, falls into the lower portion 115 for the collection and from here onto the handling means 102 in a position which is more downstream relative to the transfer point of the ground composite material from the means 101 to the means 102.

The processing continues with a first de-metallizing stage.

Therefore, the handling means 102 transfer the composite material resulting from the previous processing to a slightly tilt vibrating table 118, in order to uniformly distribute the material. The vibrating table 118 brings to the handling means 119, typically a conveyor belt, where the separation of copper and aluminium is carried out by magnetic induction. In substance, the magnetic inductor 120, generating a rotating magnetic field, gives rise to induced currents (eddy currents) in the metallic material, which produce such a repulsive force as to cause a jump thereof and hence the expulsion thereof from the flow of the inert material. Thereby, the inert material - plastic materials, (heavy) brass and steel, wood, glass, etc. - fall onto the collecting container 121 at the end of the handling means 119, whereas copper and aluminium, being expelled from the main flow as said above, "jump" into the collecting container 122 located straight downstream of the container 121.

The thus processed composite material is then subjected to a second demetallizing stage.

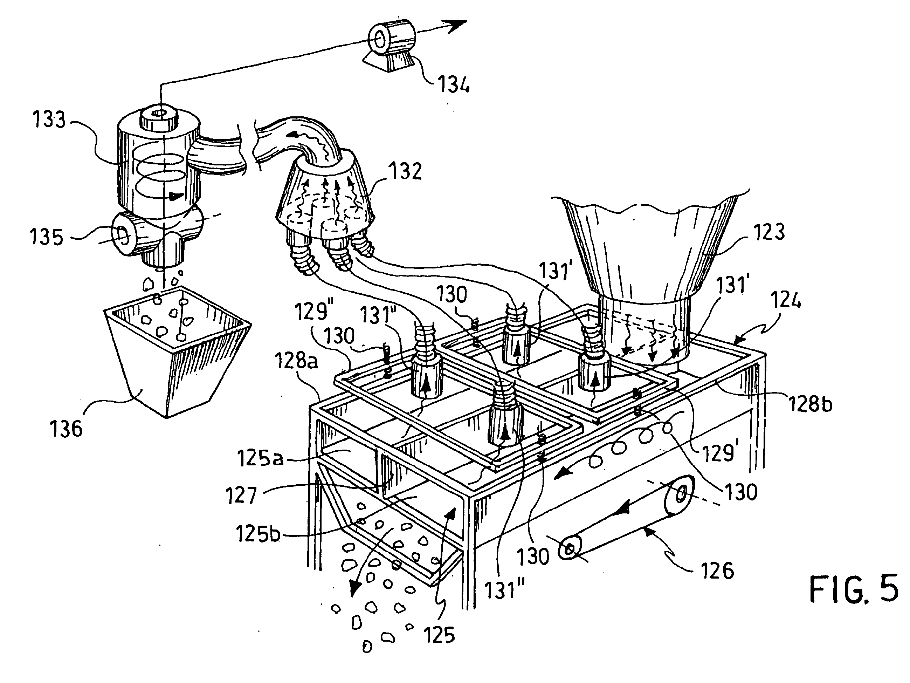

As shown in figure 5, the composite material deriving from the previous processing is conveyed onto vibrating screening means 124, by means of suitable handling means 123 (typically, a screw conveyer).

These vibrating screening means 124 comprise a vibrating plate 125, set in vibration by vibrating means 126 giving an up-and-down motion with a longitudinal and vertical component to the plate 125, so that the material is induced to advance and simultaneously to vertically jump. To this purpose, the vibrating means 126 will typically comprise an eccentric transmission system.

The vibrating plate 125 is divided into two longitudinal portions 125a, 125b by a board 127. This allows a better distribution of the material to be treated on the plate 125.

The vibrating plate 125 is further enclosed between two side boards 128a, 128b, on which frames 129', 129" are mounted. Suitable adjusting screws 130 allow the distance between the frames 129', 129" and the vibrating plate 125 to be changed. Some intake ports 131', 131" being connected to a manifold 132 by means of a suitable pipeline, which, in turn, opens on the upper portion of a cyclone 133 being completely similar to the cyclone 105 described above are arranged on said frames.

The cyclone 133 is in flow communication with intake means 134 at the upper side thereof, whereas it comprises an exhaust opening at the lower side thereof provided with valve means 135, typically a star valve, which are suitable for the material discharge without allowing the air to flow in from the outside. A collecting container 136 is arranged under said valve means 135.

The intake ports 131', being the first to intercept the flow of material flowing from the handling means 123, are located at a higher distance from the vibrating plate 125 relative to the second intake ports 131". Thereby, a first coarse drawing in of the recovery plastic material by means of the ports 131' and a second fine drawing in of the particulate having a smaller size by means of the ports 131" are carried out. Therefore, all the recovery plastic material can be completely and efficiently drawn in. Only the heavier metallic materials, such as brass or stainless steel as well as heavy non-metallic materials, specifically glass, are left on the vibrating plate 125, which are conveyed to a suitable disposal container (not shown).

All the drawn-in material is collected in the manifold 132 and from here it is conveyed to the cyclone 133, where the turbulent circular motion to which it is subjected separates the top-deposited light material dust (particularly, PUR) and the bottom-deposited recovery plastic material which is transferred to the collecting container 136, by means of the valve means 135.

Both the discarded material (PUR) being drawn in by the intake means 107 during the previous recovery stage, and the material being drawn in by the intake means 134 during this stage are conveyed to briquetting means (not shown) which provide for compacting the material until the latter reaches the density required either for the disposal in waste dump sites or the heat-utilization.

### Cleaning step

The composite material which reaches the cleaning step has been largely deprived both of the synthetic discarded materials (PUR) and the metallic (particularly iron, steels, brass, copper, aluminium) and non-metallic (glass) materials during the previous separating step. However, this material can still include a certain amount of said materials, particularly of foamed polyurethane, which will have to be totally removed in order to obtain a high-purity recovery plastic material. This is particularly the case of the refrigerator recycling, because, as said above, a considerable amount of polyurethane is adhered on the surface either of the other plastics or metallic materials in the form of a layer, due to the bonding agent used for manufacturing refrigerators. The removal of said PUR is particularly difficult and may not be completed during the previous separating step.

At the end of the cleaning step a blank recovery plastic material will be obtained, which will be then subjected to the washing and the isolating and surface purification of the recovery plastic material as a finished product.

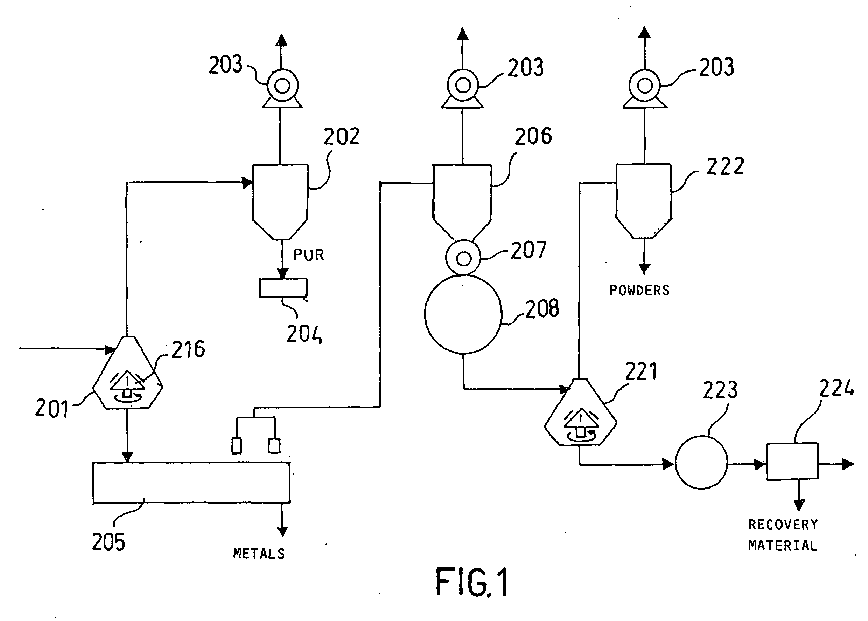

A schematic block view of the operations of the cleaning step is shown in figure 1. The material deriving from the second demetallizing stage is introduced into a centrifugal separator 201, being completely similar to the separator 112 described above. Even in this case, the mechanical action being carried out by the turbulence generated by the rotor 216 causes the nearly total separation of the synthetic discarded material, which is conveyed into the cyclone 202 (similar to the cyclone 105 or 133) due to the intake means 203 being arranged along a pipeline leaving the top of the cyclone 202. The separation of this discarded material in discrete pieces - which is discharged from the bottom of the cyclone by means of a star valve and then collected in containers 204 in order to be conveyed to the briquetting - from the dusts thereof which are held by suitable filtering means (typically, bag filters) in order to be then disposed of is carried out in the cyclone 202.

The centrifugal separator 201 is undersized compared to the separator 112. However, in a different embodiment the centrifugal separator 112 could be removed and the material could be directly treated in the separator 201, which in this case will have a larger size. Thereby, however, a second centrifugal separator (not shown) could be required to be set downstream of the separator 201.

The material flowing from the bottom of the centrifugal separator 201 can be subjected to a demetallizing stage. This material is conveyed onto vibrating screening means 205 being completely similar to the means 124 described above, in which the metallic material is discharged and the remaining material is drawn in and introduced into a second cyclone 206, where the separation between the dusts (residual PUR and other) and the particulate material is carried out again.

This material is transferred, by means of valve means 207, typically a star valve into the mill 208, where the pulverization of the wood optionally present in the composite material and, particularly, the removal of the tacky residues being adhered on the recovery plastic material are carried out.

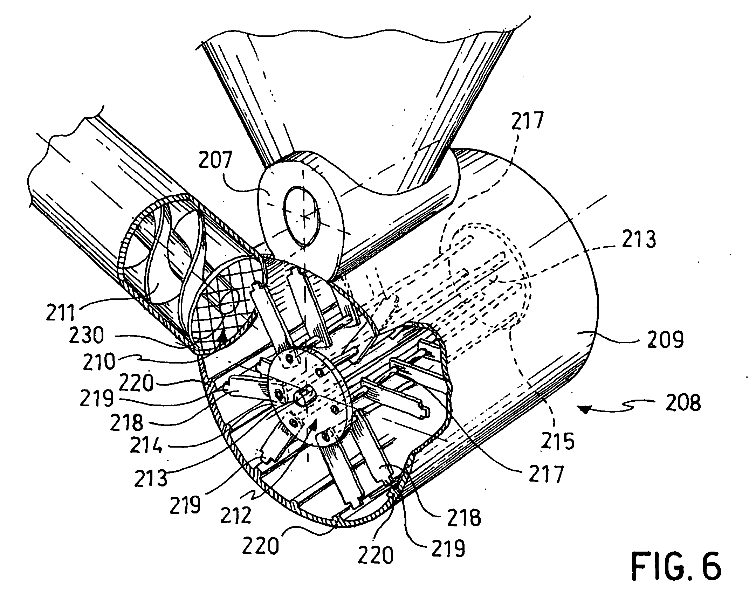

The mill 208 is preferably a hammer mill, such as shown in figure 6. The mill 208 comprises a cylindrical body 209 provided with an upper aperture from which the material flowing from the cyclone 206 is loaded and an exhaust opening 210 from which the treated material is drawn in by means of suitable handling means 211, preferably a screw conveyer. A support 212 being pivoted on a shaft 213 is rotatably arranged within the cylindrical body 209. The support 212 consists of at least one first and second discs 214, 215, being spaced from a plurality of support rods 217. One or more hammers 218 are rotatably hinged in neutral on each support rod 217. The hammers 218 end with a tooth 219 at the distal end. Ribbings 220 are placed onto the inner wall of the cylindrical body 209. The distance between the teeth 219 and the ribbings 220 is usually lower than the medium size of the material to be treated, so that the material is grasped between teeth 219 and ribbings 220 and then subjected to the friction cleaning action. For example, the distance between the tooth 219 and the ribbing 220 can be of about 5 mm, when the two elements are in axis with each other.

The shaft 213, being handled by a suitable motorization (not shown), revolves at about 600-800 rpm. An amount of cold air sufficient to maintain the room temperature, or slightly above, is introduced into the mill 208, through means not shown. Preferably, the ratio of the volume of the material to be treated to the volume of the air introduced is 1 : 10. The presence of the cold air is very important because, if absent, the friction would cause a rise in temperature in the mill up to the melting of all the plastic material. Moreover, the low temperature inside the mill aids in the "crystallization" of the adhesive being present on the material to be treated and hence the removal thereof.

The residence time of the material to the inside is also very important and will have to be adjusted based on the experience. A too long residence time would cause the pulverization of the material. The adjustment of the residence time may be carried out by adjusting the load speed of the material through the valve means 207 and the exhaust speed through the handling means 211.

The material flows through a gauged netting 230 (holes 15-25 mm in diameter) outside the mill 208, and is loaded by said handling means 211 in a centrifugal separator 221 similar to the separator 201, but usually of smaller sizes, from which the dusts formed in the mill 208 are drawn in within the cyclone 222 (from which the lighter dusts are top drawn in and filtered, whereas the heavier dusts are discharged from the bottom).

The material flowing from the bottom of the centrifugal separator 221 is introduced into centrifugal means 223. These centrifugal means 223 are of the conventional type and comprise a substantially cylindrical shell on the bottom of which suitable rotating blades carry out a further cleaning action by friction of the treated material and, particularly, create a homogeneous size distribution for the subsequent vibrating screening. The revolving speed of this centrifuge 223 is 300-500 rpm.

The material flowing from the centrifugal means 223 is conveyed onto vibrating screening means 224 of the conventional type. These vibrating screening means 224 comprise a slightly tilted vibrating screen (rotary motion on the plane), which drops the recovery plastic material and holds the impurities of a higher size which are then moved away by means of suitable handling means (not shown).

The handling means used for transferring the material being processed among the various operating units of the system are of the conventional type and may be of different types. However, it will be preferred to use screw conveyers having a smaller size and a higher conveying safety (closed conveyer).

The recovery material being collected by the vibrating screening means 224 is conveyed to the subsequent washing step.

### Washing step

The washing step of the recovery material is carried out with water and allows the dusts and the little residues being adhered on the material by electrostatic attraction to be mainly removed.

The material deriving from the cleaning step is introduced into the washing tank 302 containing water, where the recovery material, having a higher specific weight, falls on the bottom. It is preferred that the material to be treated is softly and gradually loaded into the washing tank 302, in order to avoid that, if violently plunged, the residue being formed by the pieces having a larger size may also flow to the bottom and may not be then separated from the recovery material. To this purpose, some vibrating means 301 comprising a tilted vibrating table which drops the material to be treated little by little from a minor height relative to the water surface are used.

The recovery material (consisting of polystyrene, PVC, ABS, in a different percentage according to the cases) is drawn in from the bottom of the tank 302 by suitable handling means, whereas the discarded material (residues/dusts of paper, wood and polyolefin material) floats.

The handling means preferably consist of a screw conveyer, raising the recovery material up to a chute bringing to the centrifugal means 303, the loading aperture of which is located at a higher position than the bottom of the tank 302.

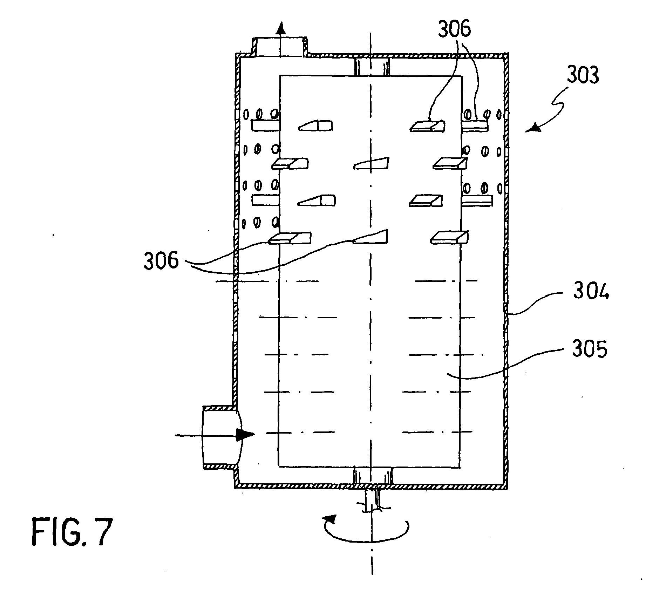

With reference to figure 7, the centrifugal means 303 preferably consist of a basket centrifuge, comprising a drilled basket 304 inside which a rotor 305 is rotatably arranged, in a coaxial position, onto which a plurality of blades 306 is fixed. The blades 306 are staggered arranged and have a substantially sectional wedge shape, having the oblique side arranged upwards and the vertex in the revolving direction of the rotor 305. The rotor 305 is moved by a suitable motorization (not shown). Thereby, the material flowing from the tank 302, together with a certain amount of entrainment water, is loaded near the bottom of the centrifugal means 303 and is then separated from the water which drains through the holes of the basket 304 by the centrifugal force. The particular shape of the blades 306 gives both a centrifugal force and an upward motion to the treated material, which is then top collected and conveyed to the subsequent isolating step.

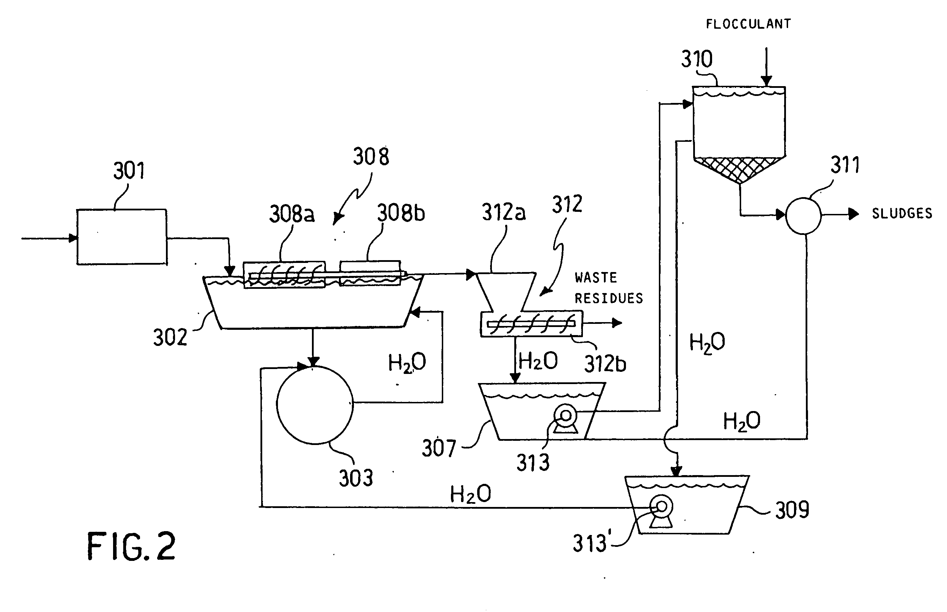

The washing tank 302 comprises surface stirring means 308, substantially consisting of one or more semisubmersed blade rotors which transmit a motion to the water surface in the tank along the tank longitudinal direction (figure 2) and hence provide for heading the waste product residues to suitable handling means 312. These rotors comprise a first scroll portion 308a and a second blade portion 308b, mounted on the same shaft being longitudinally arranged relative to the washing tank 302. In practice, the first scroll portion 308a gives the surface motion to the water on which the waste product residues float, whereas the second blade portion 308b causes a remixing of said residues. Preferably, two surface stirring means 308 are employed in parallel.

The handling means 312 which capture the waste product residues flowing from the washing tank 302 preferably comprise drainage means, such that the waste product residues are suitably drained before they are headed to the disposal. In substance, it is preferred to use a screw conveyer in which both the loading hopper 312a and the scroll casing 312b are provided with drainage holes. The waste product residues flowing from the handling means 312 are headed to the disposal.

The water dripping from the drainage means of the handling means 312, still loaded with suspended fine dusts, is accumulated in the tank 307 below, having the function of a lung, where suitable pumping means 313 provide for conveying this dirty stream to the settling means 310 (preferably, a static settler). A flocculating agent is added in said settling means 310 in order to aid in forming sludges, which can be easily removed.

The waste product sludges are accumulated inside the settling means 310 on the bottom, where they are conveyed to drainage means 311 little by little by hydrostatic pressure, and hence to the disposal.

The water drained from the drainage means 311 is reintroduced into the tank 307. A further water recycle is directly carried out from the settling means 310 to a second lung tank 309 and from here to the centrifugal means 303, at the chute for loading the material to be centrifuged, by means of pumping means 313', in order to make the flowing of the material easier. The water drained from the centrifugal means 303 is further recycled in the washing tank 302, so that the system may be substantially considered a closed system, where only the reintroduction of a small amount of water (about 5% compared to the circulating volume) is required for restoring the one lost by evaporation.

Preferably, the pumping means 313, 313' are automatically operated when the water level in the lung tanks 307, 309 exceeds a predetermined level.

### Isolating step

The isolating step has the purpose of separating the recovery material being present in a higher percentage from the other potentially valuable materials, the amount of which, however, is not such as to justify the recovery thereof.

The isolating of the recovery material is carried out by dipping the material to be treated in a selecting means and exploiting the different specific weight of the various materials. It will be possible to carry out the material separation by pre-setting a selecting means having an average density between the specific weight of the material to be selected and the one of the materials to be wasted. Particularly, if the recovery material has a specific weight which is lower than the one of the materials to be wasted, with the method of the invention the recovery material will float, whereas the other materials will sink. This is the case of the separation of polystyrene (PS) from ABS and PVC.

The selecting means is preferably water in which a salt is dissolved. The salt used is typically sodium chloride. A higher density of the selecting means will be obtained by increasing the salt concentration. In order to separate PS from the other materials such as ABS or PVC a salt solution having a density of 1.055-1.060 g/cm³ can be prepared.

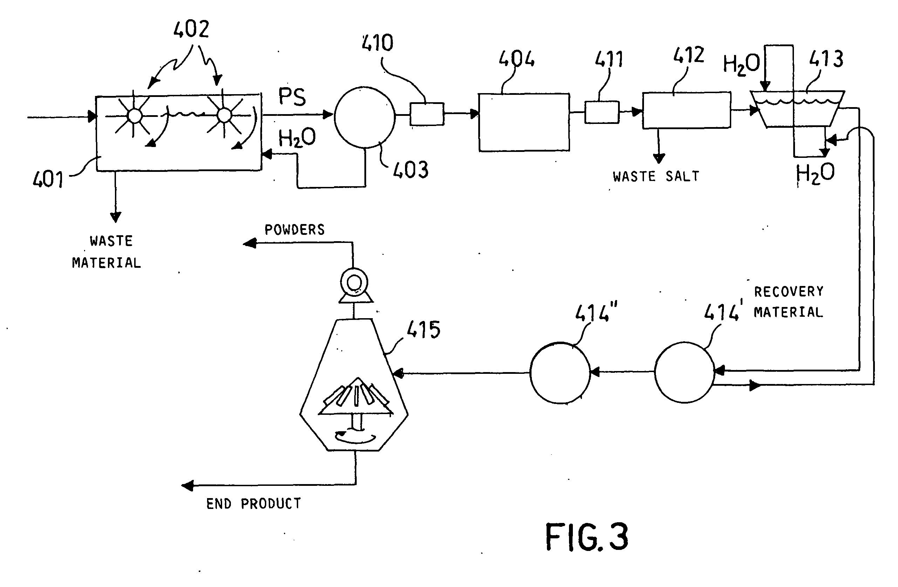

The material from the previous washing step is introduced into a selecting tank 401 containing the selecting means. The tank comprises stirring means 402 which operate on the free surface. These stirring means 402 preferably comprise one or more (in the example from figure 3, two) semisubmersed paddle stirrers producing such a surface current as to convey the supernatant material to an end of the selecting tank 401 where this material is discharged by overflowing from the tank 401, by means of a chute (not shown). In the example described herein above, in which the recovery material is polystyrene (PS) - main recovery material in the refrigerator recycling - the supernatant material consists of PS, whereas the other materials, being also present but in a smaller amount, are drawn in from the bottom of the tank 401 by means of suitable handling means (for example, a screw conveyer).

The recovery polystyrene (PS) flowing from the selecting tank 401 is transferred into the centrifugal means 403, where the PS is separated from the water entrained from the tank. These centrifugal means 403 preferably consist of a basket centrifuge being completely similar to the one described above (centrifugal means 303 from figure 7).

### Surface purification step

The recovery material (in the example, PS) flowing from the centrifugal means 403, still wet, carries a considerable amount of salt deriving from the isolating step. The material requires to be completely dried, but this causes a strong salt concentration on the particulate surface, which makes the reuse thereof impossible in quality applications. Therefore, for these uses the recovery material requires to be purified by removing the bonded salt. The simpler method is a water washing, but this operation has a drawback: in fact, for environmental reasons, it is not possible to dispose of an aqueous solution having a salt content which is higher than 1 gr/mc. Thereby, the only possible alternative would be to use a large amount of washing water, so as to dilute the salt. However, this solution may not be accepted both in terms of economy and system dimensions.

Therefore, it is a particular object of the present invention a method for surface purificating the recovery material from the salt residues which provides that the recovery material may be simultaneously subjected to a heat and abrasive treatment, so as to evaporate the residual water and to detach the salt being crystallized on the surface of the recovery material.

This stage of the method is carried out by means of centrifugal stirring means 404, being capable of giving a vortical motion to the material, in which the pieces of material, due to a mutual impact and with the same stirring means, are subject to such a friction as to cause the temperature to rise - with a consequent water evaporation - and detach in the form of dust the crystalline salt being adhered on the material.

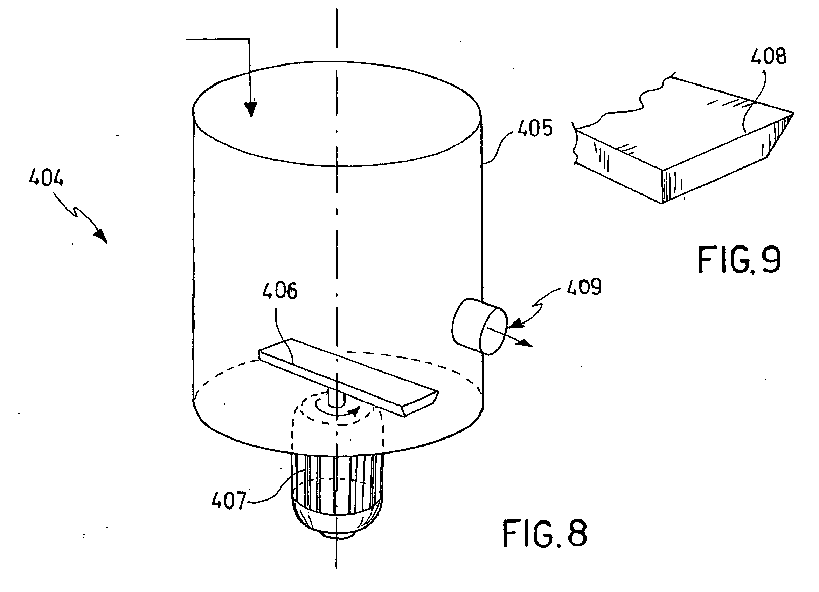

These centrifugal stirring means 404 are shown for example in figure 8. They comprise a cylindrical shell 405, on the bottom of which a blade 406 being moved by motorization 407 is rotatably arranged. As shown in figure 9, the blade 406 has a wedge-shaped edge 408 turned towards the revolving direction. The inlet of the material to be treated is carried out from the top, whereas the discharge thereof is carried out through a suitable aperture 409 being situated on the lower portion of the cylindrical wall of the shell 405.

It is preferred that the blade 406 revolves at a speed which is higher than 1000 rpm, preferably higher than 1200 rpm, typically about 1400 rmp. In order to achieve a good processing efficienty, it is preferred that the cylindrical shell 405 is filled for 30-50% of the volume thereof. Another very important factor is the residence time of the material within the centrifugal stirring means 404. Too short times would not allow the surface purification of the material from the salt. On the contrary, too long times could cause an excessive rise in temperature, until the material is melted to the inside. By way of example, typical residence times can range between 3 and 5 minutes.

The determination/adjustment of the filling degree of the centrifugal stirring means 404 can be performed by measuring the current absorption of the motorization 407, which will increase with the increase in the filling of the shell 405, and suitably calibrating the equipment. Therefore, a motor absorption (indicated in Ampère) may be predetermined, to which a certain filling degree will correspond. When this absorption is obtained, the material loading into the centrifugal stirring means 404 will be suspended.

The material loading into and discharge from the centrifugal stirring means 404 are carried out by suitable loading 410 and discharge 411 means, typically comprising screw conveyers provided with a wide storage tank. The adjustment of the residence time of the material inside the centrifugal stirring means 404 may be obtained either by operating or locking said handling means 410, 411. At the beginning of the operation, the loading means 410 will be operated, whereas the discharge means 411 will be inactive. When the desired load degree has been reached, the loading means 410 are locked. At the end of the predetermined residence time, the discharge means 411 are activated, in order to empty out the centrifugal stirring means 404 of the treated material. All these operations may be conveniently automatically adjusted by a control and monitoring unit which reads the motor absorption 407 and accordingly operates/deactivates the loading means 410. The activation/deactivation of the discharge means 411 can be automatically carried out by the same control and monitoring unit, either by pre-setting the residence time of the material in the centrifugal stirring means 404, or by reading the temperature within the shell 405, by means of suitable sensors, and operating the discharge means if the temperature exceeds a predetermined threshold. In fact, it is essential that the internal temperature of the centrifugal stirring means 404 is lower than the softening temperature of the material to be treated.

The recovery material flowing from the centrifugal stirring means 404 is conveyed to screening means 412, where the water evaporation is completed and where the salt in the form of dust falls through the holes of the screening means. The screening means 412 preferably consist of a drilled vibrating table (vibrating screen), but a revolving drilled drum can also be used.

The salt is then conveyed to the disposal, whereas the recovery material, having saline dust still adhered thereon, is conveyed to the final washing (for example, by means either of a screw conveyer or other handling means). This washing is carried out in a washing tank 413 being filled with water. It is preferred that even in this processing the material residence time is predetermined. Preferably, about 0.4 mc/hr of recovery material will flow.

The recovery material, being collected on the bottom of the tank 413, is drawn in by means of suitable handling means (preferably, a bottom-up-operating screw conveyer) and is conveyed to drying means 414', 414", which in the present embodiment consist of two centrifugal means (similar to the means 303 described above) set in series. The water collected from the centrifugal means 414', 414", is reintroduced into the same tank 413, together with the water flowing from the tank 413.

Finally, the recovery plastic material is conveyed to a centrifugal separator 415 (completely similar to the separator 112 described above) where the last residues of dusts are top moved away, whereas the finished product is discharged from the bottom.

The advantages of the present invention are understood from the description above.

With the method and its respective equipment according to the invention the recovery plastic material can be efficiently isolated in a purified form, so as to make the use thereof possible even in applications requiring a higher quality material.

The equipment of the invention has a low cost and a compact size, so that the system may treat a volume of material that would require wide surfaces and high investments, with the known systems.

It is understood that only some particular embodiments of the method and equipment being the object of the present invention have been described, to which those skilled in the art will be able to carry out all the modifications required for the adjustment thereof to particular applications, without thereby departing from the scope of protection of the present invention.

## Claims

1. A method for recycling composite material for obtaining recovery plastic material, comprising at least one isolating step of said recovery plastic material and one surface purification step of said isolated recovery plastic material, wherein said surface purification step provides that said recovery plastic material may be simultaneously subjected to a heat and abrasive treatment in centrifugal stirring means (404) in which said heat and abrasive treatment is obtained due to the friction among the pieces of plastic material and between said pieces of plastic material and the centrifugal stirring means (404) and wherein said recovery plastic material is subjected to a drying process by means of centrifugal means (403), upstream of said surface purification step.

2. The recycling method according to claim 1, wherein said centrifugal stirring means (404) comprise a cylindrical shell (405), on the bottom of which a blade (406) is rotatably arranged, said blade (406) having a wedge-shaped edge (408) being turned towards the revolving direction.

3. The method according to claim 1 or 2, wherein the revolving speed of said centrifugal stirring means (404) is higher than 1000 rpm, preferably higher than 1200 rpm, more preferably about 1400 rpm.

4. The method according to any of the claims 1 to 3, wherein the temperature inside said centrifugal stirring means (404) is lower than the softening temperature of the recovery plastic material.

5. The method according to any of the claims 1 to 4, wherein said centrifugal stirring means (404) are filled for 30-50% of the volume thereof.

6. The method according to any of the claims 1 to 5, wherein the determination/adjustment of the filling degree of said centrifugal stirring means (404) is performed by measuring the current absorption of the motorization (407) of said centrifugal stirring means (404) and calibrating the equipment such that a certain filling degree corresponds to a predetermined current absorption of said- motorization, so that when this current absorption is obtained, the material loading into said centrifugal stirring means (404) will be suspended.

7. The method according to any of the claims 1 to 6, wherein said centrifugal stirring means (404) comprise loading means (410) and discharge means (411) of said recovery plastic material, comprising screw conveyers provided with a storage tank, the adjustment of the residence time of the material inside said centrifugal stirring means (404) being obtained either by operating or deactivating said loading and discharge means (410, 411).

8. The method according to claim 6 or 7, wherein said adjustment of the filling degree of said centrifugal stirring means (404) is automatically controlled by a control and monitoring unit which reads the absorption of said motorization (407) and accordingly operates/deactivates said loading and discharge means (410, 411).

9. The method according to claim 8, wherein the adjustment of the residence time of the recovery plastic material in said centrifugal stirring means (404) is automatically carried out by said control and monitoring unit, either by pre-setting the residence time of the material in the centrifugal stirring means (404), or by reading the temperature within the shell (405), by means of suitable sensors, and activating said discharge means (411) if the temperature exceeds a predetermined threshold.

10. The recycling method according to any of the claims 1 to 9, wherein said isolating step of said recovery plastic material is carried out by dipping the material to be treated in a selecting means having an average density between the specific weight of the material to be selected and the one of the materials to be wasted, such that the material heaving a specific weight which is lower than the density of said selecting means floats, whereas the materials having a higher specific weight sink.

11. The recycling method according to clam 10, wherein said selecting means is a salt aqueous solution, preferably a sodium chloride aqueous solution.

12. The recycling method according to any of the claims 1 to 11, wherein said recovery plastic material is subjected to one or more dust separating stages and to at least one washing stage, downstream of said centrifugal stirring means (404).

13. The recycling method according to claim 12, wherein said one or more dust separating stages are carried out in screening means (412) and/or in a centrifugal separator (415).

14. The recycling method according to any of the claims 1 to 13, comprising a cleaning step of said composite material from the residues of said metallic materials, synthetic discarded materials such as foamed materials and non-plastic materials such as wood and glass and from tacky residues.

15. The recycling method according to any of the claims 1 to 14, comprising the following steps in succession:
(a) grinding step of a composite product for providing a composite material;
(b) separating step of metallic materials, synthetic discarded materials such as foamed materials and non-plastic materials such as wood and glass from said composite material;
(c) cleaning step of said composite material from the residues of said metallic materials, synthetic discarded materials such as foamed materials and non-plastic materials such as wood and glass and from tacky residues for obtaining a blank recovery plastic material;
(d) washing step of said blank recovery plastic material;
(e) isolating step of said recovery plastic material;
(f) surface purification step of said recovery plastic material for providing the finished product.

16. The recycling method according to claim 15, wherein said composite material leaving said grinding step (a) has a mean size of 35-40 mm.

17. The recycling method according to claim 15, wherein said separating step (b) comprises: i) a de-ironing stage by magnetic attraction, ii) a draw-in stage of the light materials, iii) a first demetallizing stage for removing copper and aluminium, and iv) a second demetallizing stage for removing the metallic materials having a higher specific weight and glass.

18. The recycling method according to claim 17, wherein said draw-in stage ii) of the light materials comprises a recovery stage of material which is different from the synthetic foamed material driven in said draw-in stage.

19. The recycling method according to claim 18, wherein said recovery stage is carried out by causing the drawn-in material to flow through a cyclone (105) from the bottom of which said material being different from the synthetic foamed material is collected and transferred to a centrifugal separator (112), by means of a star valve (108) and loading means (109).

20. The recycling method according to claim 19, wherein said centrifugal separator (112) comprises a cone-shaped body (113) having a drawn-in upper aperture and a lower exhaust opening, a cone-shaped motorized rotor (116) being rotatably supported in a coaxial position in said cone-shaped body (113), said rotor (116) having a vertex angle which is higher than the one of the upper portion of the cone-shaped body (113), blades (117) being arranged on the surface of said rotor (116).

21. The recycling method according to claim 20, wherein said rotor (116) is longitudinally sliding.

22. The recycling method according to claim 17, wherein said second demetallizing stage comprises the treatment of the composite material on vibrating screening means (124) comprising a vibrating plane (125), being set in vibration by vibrating means (126) giving an up-and-down motion with a longitudinal and vertical component to the plane (125), and intake ports (131', 131") for drawing in the recovery plastic material in a substantially selective manner compared to the metals having a higher specific weight and glass.

23. The recycling method according to claim 22, wherein said vibrating plane (125) is divided into two longitudinal portions (125a, 125b) by a board (127) and wherein frames (129', 129") are arranged on said vibrating plane (125), the distance of which can be adjusted relative to said vibrating plane (125) by means of adjusting screws (130), said intake ports (131', 131") being arranged on said frames (129', 129").

24. The recycling method according to claim 14 or 15, wherein said cleaning step (c) of the recovery plastic material comprises the treatment of said material in a mill (208) comprising a cylindrical body (209) provided with an upper loading opening and an exhaust opening (210) being filtered by a gauged netting (230), from which the treated material is drawn in by means of suitable handling means (211), a support (212) on which one or more hammers (218) are rotatably hinged in neutral being rotatably arranged within said cylindrical body (209).

25. The recycling method according to claim 24, wherein said hammers (218) end with a tooth (219) at the distal end, and wherein ribbings (220) are placed onto the inner wall of the cylindrical body (209), the distance between the teeth (219) and the ribbings (220) being lower than the mean size of the material to be treated.

26. The recycling method according to claim 24 or 25, wherein said support (212) revolves at 600-800 rpm and wherein a cold air current is inverted into said mill, the ratio of the volume of the material to be treated to the volume of the air introduced being 1 : 10.

27. The recycling method according to claim 15, wherein said washing step (d) of said blank recovery plastic material comprises the washing of said material with water and the drying of said washed material in centrifugal means (303) comprising a drilled basket (304) inside which a rotor (305), onto which a plurality of blades (306) is placed, is rotatably arranged in a coaxial position, said blades (306) being staggered arranged and having a substantially sectional wedge shape, having the oblique side arranged upwards and the vertex in the revolving direction of the rotor (305).

28. The recycling method according to any of the claims 1 to 27, wherein said recovery plastic material is polystyrene.

29. The recycling method according to any of the claims 1 to 28, wherein the composite product being the object of the recycling is either a refrigerator or the like.

## Patentansprüche

1. Verfahren zum Recyceln eines Verbundmaterials zum Erhalten eines rückgewonnenen Kunststoffmaterials, aufweisend wenigstens einen Schritt zum Isolieren des rückgewonnenen Kunststoffmaterials und einen Schritt zur Oberflächenreinigung des isolierten, rückgewonnenen Kunststoffmaterials, wobei der Schritt zur Oberflächenreinigung vorsieht, dass das rückgewonnene Kunststoffmaterial gleichzeitig einer Behandlung durch Aufheizen und Abtragen in einer zentrifugalen Rühreinrichtung (404) unterzogen werden kann, in der die Behandlung durch Aufheizen und Abtragen aufgrund von Reibung zwischen den Teilen des Kunststoffmaterials untereinander und zwischen den Teilen des Kunststoffmaterials und der zentrifugalen Rühreinrichtung (404) erfolgt, und wobei das rückgewonnene Kunststoffmaterial einem dem Schritt zur Oberflächenreinigung vorgeschalteten Trocknungsprozess durch eine Zentrifugiereinrichtung (403) ausgesetzt wird.

2. Recyclingverfahren nach Anspruch 1, wobei die zentrifugale Rühreinrichtung (404) ein zylindrisches Gehäuse (405) aufweist, an dessen Boden eine Klinge (406) drehbar angeordnet ist, wobei die Klinge (406) eine keilförmige Kante (408) aufweist, die in Richtung der Drehrichtung der Klinge (406) ausgerichtet ist.

3. Verfahren nach Anspruch 1 oder 2, wobei die Drehgeschwindigkeit der zentrifugalen Rühreinrichtung (404) größer als 1000 Umdrehungen pro Minute ist, bevorzugt größer als 1200 Umdrehungen pro Minute, weiter bevorzugt etwa 1400 Umdrehungen pro Minute.

4. Verfahren nach einem der Ansprüche 1 bis 3, wobei die Temperatur innerhalb der zentrifugalen Rühreinrichtung (404) kleiner ist als die Erweichungstemperatur des rückgewonnenen Kunststoffmaterials.

5. Verfahren nach einem der Ansprüche 1 bis 4, wobei die zentrifugalen Rühreinrichtungen (404) zu 30 - 50% ihres Volumens gefüllt sind.

6. Verfahren nach einem der Ansprüche 1 bis 5, wobei die Bestimmung/Einstellung des Füllgrades der zentrifugalen Rühreinrichtung (404) durch Messung der augenblicklichen Absorption der Motorisierung (407) der zentrifugalen Rühreinrichtung (404) und Kalibrierung der Anlage erfolgt, derart, dass ein gewisser Füllgrad einer vorbestimmten, augenblicklichen Absorption der Motorisierung entspricht, so dass, wenn diese augenblickliche Absorption erreicht wird, die Materialzufuhr zur zentrifugalen Rühreinrichtung (404) unterbrochen wird.

7. Verfahren nach einem der Ansprüche 1 bis 6, wobei die zentrifugale Rühreinrichtung (404) eine Beladungseinrichtung (410) und eine Entladungseinrichtung (411) für das rückgewonnene Kunststoffmaterial aufweist, die mit einem Speichertank ausgestattete Förderschnecken aufweisen, wobei die Anpassung der Verweildauer des Materials im Innern der zentrifugalen Rühreinrichtung (404) entweder durch Betreiben oder Deaktivieren der Beladungs- und Entladungseinrichtungen (410, 411) bewirkt wird.

8. Verfahren nach Anspruch 6 oder 7, wobei die Anpassung des Füllstandes der zentrifugalen Rühreinrichtung (404) automatisch durch eine Steuerungs- und Überwachungseinheit gesteuert wird, die die Absorption der Motorisierung (407) abfragt und entsprechend die Beladungs- und Entladungseinrichtungen (410,411) betreibt/deaktiviert.

9. Verfahren nach Anspruch 8, wobei die Anpassung der Verweildauer des rückgewonnenen Kunststoffmaterials in der zentrifugalen Rühreinrichtung (404) automatisch durch die Steuerungs- und Überwachungseinheit ausgeführt wird, entweder durch Vorgabe der Verweildauer des Materials in der zentrifugalen Rühreinrichtung (404) oder durch Abfragen der Temperatur im Gehäuse (405) mit Hilfe geeigneter Sensoren und Aktivierung der Entladungseinrichtung (411), falls die Temperatur einen vorgegebenen Schwellwert überschreitet.

10. Recyclingverfahren nach einem der Ansprüche 1 bis 9, wobei der Schritt zum Isolieren des rückgewonnenen Kunststoffmaterials durch Eintauchen des zu behandelnden Materials in ein Aussonderungsmittel ausgeführt wird, das eine mittlere Dichte zwischen dem spezifischen Gewicht des auszuwählenden Materials und dem der abfallenden Materialien aufweist, derart, dass das Material mit dem geringeren spezifischen Gewicht als die Dichte des Aussonderungsmittels schwimmt, wohingegen das Material mit dem größeren spezifischen Gewicht sinkt.

11. Recyclingverfahren nach Anspruch 10, wobei das Aussonderungsmittel eine wässrige Salzlösung ist, vorzugsweise eine wässrige Natriumchloridlösung.

12. Recyclingverfahren nach einem der Ansprüche 1 bis 11, wobei das rückgewonnene Kunststoffmaterial einem oder mehreren Behandlungsschritten zum Abtrennen von Staub und wenigstens einem der zentrifugalen Rühreinrichtung (404) nachgelagerten Behandlungsschritt zum Waschen (404) ausgesetzt wird.

13. Recyclingverfahren nach Anspruch 12, wobei der eine oder die Behandlungsschritte zum Abtrennen von Staub in einer Siebeinrichtung (412) und/oder in einem Zentrifugalabscheider (415) durchgeführt werden.

14. Recyclingverfahren nach einem der Ansprüche 1 bis 13, aufweisend einen Schritt zum Reinigen des Verbundmaterials von Resten metallischer Materialien, synthetischer Abfälle wie Schaumstoffen, und Nicht-Kunststoffmaterialen wie Holz und Glas und von anhaftenden Resten.

15. Recyclingverfahren nach einem der Ansprüche 1 bis 14, aufweisend die aufeinander folgenden Schritte:
(a) einen Schritt zum Mahlen eines Verbundprodukts zur Bereitstellung eines Verbundmaterials;
(b) einen Schritt zum Abtrennen von metallischen Materialien, synthetischen Abfällen wie Schaumstoffen, und Nicht-Kunststoffmaterialen wie Holz und Glas aus dem Verbundmaterial;
(c) einen Schritt zum Reinigen des Verbundmaterials von den Resten der metallischen Materialien, der synthetischen Abfälle wie den Schaumstoffen, und der Nicht-Kunststoffmaterialen wie Holz und Glas, und von den anhaftenden Resten, zum Erhalten eines reinen, rückgewonnenen Kunststoffmaterials;
(d) einen Schritt zum Waschen des reinen, rückgewonnenen Kunststoffmaterials;
(e) einen Schritt zum Isolieren des rückgewonnenen Kunststoffmaterials;
(f) einen Schritt zur Oberflächenreinigung des rückgewonnenen Kunststoffmaterials zum Bereitstellen eines Endprodukts.

16. Recyclingverfahren nach Anspruch 15, wobei das den Schritt zum Mahlen (a) verlassende Verbundmaterial eine Durchschnittsgröße von 35 - 40 mm aufweist.

17. Recyclingverfahren nach Anspruch 15, wobei der Schritt zum Abtrennen (b) aufweist: i) einen Schritt zum Eisenabtrennen durch magnetische Anziehung, ii) einen Schritt zum Absaugen leichter Materialien, iii) einen ersten Schritt zum Entmetallisieren, um Kupfer und Aluminium zu entfernen, und iv) einen zweiten Schritt zum Entmetallisieren, um metallische Materialien mit einem höheren spezifischen Gewicht und Glas zu entfernen.

18. Recyclingverfahren nach Anspruch 17, wobei der Schritt zum Absaugen ii) der leichten Materialien einen Schritt zum Rückgewinnen von Material umfasst, das sich von den synthetischen Schaumstoffmaterialien unterscheidet, die in den Schritt zum Absaugen gelangen.

19. Recyclingverfahren nach Anspruch 18, wobei der Schritt zum Rückgewinnen **dadurch** bewirkt wird, dass das abgesaugte Material durch eine Wirbelkammer (105) strömt, an deren Boden das Material, das sich von dem synthetischen Schaumstoffmaterial unterscheidet, gesammelt wird und mit Hilfe eines Ventilsterns (108) und einer Beladungseinrichtung (109) einem Zentrifugalabscheider (112) zugeführt wird.

20. Recyclingverfahren nach Anspruch 19, wobei der Zentrifugalabscheider (112) ein konisches Gehäuse (113) mit einer oberen Einsaugmündung und einer unteren Ausströmöffnung aufweist, ein konischer, motorisierter Rotor (116) in einer koaxialen Position in dem konischen Gehäuse (113) drehbar gelagert ist, wobei der Rotor (116) einen Scheitelpunktswinkel aufweist, der größer ist als der Winkel der oberen Abschnitte des konischen Gehäuses (113), wobei Klingen (117) auf der Oberfläche des Rotors (116) angeordnet sind.

21. Recyclingverfahren nach Anspruch 20, wobei der Rotor (116) longitudinal verschiebbar ist.

22. Recyclingverfahren nach Anspruch 17, wobei die zweite Stufe zum Entmetallisieren aufweist eine Behandlung des Verbundmaterials auf schwingenden Sortiermitteln (124), die durch ein Schwingmittel (126) in Schwingung versetzt wird, welches eine Auf-und-Ab-Bewegung mit einer longitudinalen und einer vertikalen Komponente zu der Ebene (125) hervorruft, und Absaugöffnungen (131', 131") zum Absaugen des rückgewonnenen Kunststoffmaterials in einer im Wesentlichen selektiven Weise verglichen mit den ein höheres spezifisches Gewicht aufweisenden Metallen und Glas.

23. Recyclingverfahren nach Anspruch 22, wobei die Schwingebene (125) durch eine Platte (127) in zwei Längsteile (129', 129") geteilt wird, und wobei Rahmen (129', 129") auf der Schwingebene (125) angeordnet sind, wobei der Abstand derselben relativ zur Schwingebene (125) durch Einstellschrauben (130) eingestellt werden kann, wobei die Absaugöffnungen (131', 131") auf den Rahmen (129', 129") angeordnet sind.

24. Recyclingverfahren nach Anspruch 14 oder 15, wobei die Schritt zum Reinigen c) des rückgewonnenen Kunststoffmaterials eine Behandlung des Materials in einer Mühle (208) umfasst, aufweisend ein zylindrisches Gehäuse mit einer oberen Zufuhröffnung und einer Auslassöffnung, die durch ein kalibriertes Gewebe (230) gefiltert wird, von dem das behandelte Material mittels eines geeigneten Handhabungsmittels (211) abgesogen wird, und eine Halterung (212), an der ein oder mehrere Hämmer (218) in Neutralstellungen drehbar gelagert sind, die im Inneren des zylindrischen Gehäuse (209) drehbar angeordnet ist.

25. Recyclingverfahren nach Anspruch 24, wobei die Hämmer (218) am entfernten Ende mit einem Zahn (219) enden, und wobei Riffelungen (220) auf der inneren Wand des zylindrischen Gehäuses (209) platziert sind, wobei der Abstand zwischen den Zähnen (219) und den Riffelungen (220) kleiner ist als die durchschnittliche Größe des zu behandelnden Materials.

26. Recyclingverfahren nach Anspruch 24 oder 25, wobei die Halterung (212) mit 600 - 800 Umdrehungen pro Minute dreht und wobei ein kalter Luftstrom in die Mühle eingeleitet wird, wobei das Verhältnis zwischen dem Volumen des zu behandelnden Materials und der zugeführten Luft 1 : 10 beträgt.

27. Recyclingverfahren nach Anspruch 15, wobei der Schritt des Waschens (d) des reinen, rückgewonnenen Kunststoffmaterials das Waschen des Materials mit Wasser und das Trocknen des gewaschenen Materials in einer Zentrifugiereinrichtung (303) umfasst, die einen gelochten Korb (304) aufweist, in dessen Inneren ein Rotor (305), auf dem eine Mehrzahl von Klingen (306) angeordnet ist, in koaxialer Ausrichtung drehbar angeordnet ist, wobei die Klingen (306) versetzt angeordnet sind und einen im Wesentlichen keilförmigen Querschnitt aufweisen, wobei die schräge Seite aufwärts und die Spitze in Drehrichtung des Rotors (305) ausgerichtet ist.

28. Recyclingverfahren nach einem der Ansprüche 1 bis 27, wobei das rückgewonnene Kunststoffmaterial Polystyrol ist.

29. Recyclingverfahren nach einem der Ansprüche 1 bis 28, wobei das den Gegenstand des Recyclings bildende Verbundprodukt entweder ein Kühlschrank oder dergleichen ist.

## Revendications

1. Procédé de recyclage de matériau composite permettant d'obtenir une matière plastique de récupération, comprenant au moins une étape d'isolation de ladite matière plastique de récupération et une étape de purification de surface de ladite matière plastique isolée de récupération, dans lequel ladite étape de purification de surface prévoit que ladite matière plastique de récupération peut être soumise simultanément à un traitement thermique et d'abrasion dans des moyens d'agitation centrifuge (404), ledit traitement thermique et d'abrasion étant obtenu sous l'effet du frottement parmi les morceaux de matière plastique et entre lesdits morceaux de matière plastique et les moyens d'agitation centrifuge (404), et ladite matière plastique de récupération étant soumise à un processus de séchage au moyen d'un moyen de centrifugation (403), en amont de ladite étape de purification de surface.

2. Procédé de recyclage selon la revendication 1, dans lequel lesdits moyens d'agitation centrifuge (404) comprennent une coque cylindrique (405) au fond de laquelle une lame (406) est disposée à rotation, ladite lame (406) présentant un bord en forme de coin (408) tourné vers la direction de roulement.

3. Procédé selon la revendication 1 ou 2, dans lequel la vitesse de roulement desdits moyens d'agitation centrifuge (404) est supérieure à 1 000 tours par minute, ou mieux supérieure à 1 200 tours par minute, mieux encore voisine de 1 400 tours par minute.

4. Procédé selon l'une quelconque des revendications 1 à 3, dans lequel la température à l'intérieur desdits moyens d'agitation centrifuge (404) est inférieure à la température de ramollissement de la matière plastique de récupération.

5. Procédé selon l'une quelconque des revendications 1 à 4, dans lequel lesdits moyens d'agitation centrifuge (404) sont remplis à hauteur de 30 à 50 % de leur volume.

6. Procédé selon l'une quelconque des revendications 1 à 5, dans lequel la détermination/ajustement du degré de remplissage desdits moyens d'agitation centrifuge (404) est réalisée par mesure de l'absorption de courant de la motorisation (407) desdits moyens d'agitation centrifuge (404) et par étalonnage de l'équipement, de manière à ce qu'un certain degré de remplissage corresponde à une absorption prédéterminée de courant de ladite motorisation, si bien que quand cette absorption de courant est obtenue, le chargement de matière dans lesdits moyens d'agitation centrifuge (404) sera suspendue.

7. Procédé selon l'une quelconque des revendications 1 à 6, dans lequel lesdits moyens d'agitation centrifuge (404) comprennent un moyen (410) de chargement et un moyen (411) de déchargement de ladite matière plastique de récupération, comprenant des vis sans fin dotées d'un réservoir de stockage, l'ajustement du temps de séjour de la matière à l'intérieur desdits moyens d'agitation centrifuge (404) étant obtenu soit par opération soit par désactivation desdits moyens de chargement et de déchargement (410, 411).

8. Procédé selon la revendication 6 ou 7, dans lequel ledit ajustement du degré de remplissage desdits moyens d'agitation centrifuge (404) est contrôlé automatiquement par une unité de régulation et de surveillance qui lit l'absorption de ladite motorisation (407) et qui actionne/désactive en conséquence lesdits moyens de chargement et de déchargement (410, 411).

9. Procédé selon la revendication 8, dans lequel l'ajustement du temps de séjour de la matière plastique de récupération dans lesdits moyens d'agitation centrifuge (404) est automatiquement réalisé par ladite unité de régulation et de surveillance, soit par réglage préalable de la durée de séjour de la matière dans les moyens d'agitation centrifuge (404), soit par lecture de la température dans la coque (405), au moyen de capteurs appropriés, et par activation dudit moyen de déchargement (411) si la température dépasse un seuil prédéterminé.

10. Procédé de recyclage selon l'une quelconque des revendications 1 à 9, dans lequel ladite étape d'isolation de ladite matière plastique de récupération a lieu par trempage du matériau à traiter dans un moyen de sélection présentant une densité moyenne comprise entre la masse spécifique du matériau à choisir et l'un des matériaux à écarter, si bien que le matériau présentant une masse spécifique inférieure à la densité dudit moyen de sélection flotte, tandis que les matériaux présentant une masse spécifique supérieure coulent.

11. Procédé de recyclage selon la revendication 10, dans lequel ledit moyen de sélection est une solution saline aqueuse, de préférence une solution aqueuse de chlorure de sodium.

12. Procédé de recyclage selon l'une quelconque des revendications 1 à 11, dans lequel ladite matière plastique de récupération est soumise à une ou à plusieurs étapes de séparation de poussière et à au moins une étape de lavage, en aval desdits moyens d'agitation centrifuge (404).

13. Procédé de recyclage selon la revendication 12, dans lequel lesdites une ou plusieurs étapes de séparation ont lieu dans un moyen de tamisage (412) et/ou dans un séparateur centrifuge (415).

14. Procédé de recyclage selon l'une quelconque des revendications 1 à 13, comprenant une étape de nettoyage dudit matériau composite à partir des résidus desdits matériaux métalliques, de matériaux de synthèse réformés tels que des matériaux soufflés et des matériaux non plastiques tels que le bois et le verre, et à partir de résidus gluants.

15. Procédé de recyclage selon l'une quelconque des revendications 1 à 14, comprenant successivement les étapes suivantes :
(a) une étape de broyage d'un produit composite permettant d'obtenir un matériau composite ;
(b) une étape de séparation entre des matériaux métalliques, des matériaux de synthèse réformés tels que des matériaux soufflés et des matériaux non plastique tels que le bois et le verre, et ledit matériau composite ;
(c) une étape de nettoyage dudit matériau composite écartant les résidus desdits matériaux métalliques, des matériaux de synthèse réformés tels que des matériaux soufflés et des matériaux non plastiques tels que le bois et le verre et écartant des résidus gluants, afin d'obtenir une matière plastique récupérée brute ;
(d) une étape de lavage de ladite matière plastique récupérée brute ;
(e) une étape d'isolation de ladite matière plastique récupérée ;
(f) une étape de purification de surface de ladite matière plastique récupérée, afin d'obtenir le produit fini.

16. Procédé de recyclage selon la revendication 15, dans lequel ledit matériau composite présente une taille moyenne comprise entre 35 et 40 mm en quittant ladite étape de broyage (a).

17. Procédé de recyclage selon la revendication 15, dans lequel ladite étape de séparation (b) comprend : i) une étape de déferrisation par attraction magnétique, ii) une étape d'agglomération de matières légères, iii) une première étape de démétallisation permettant d'enlever du cuivre et de l'aluminium, et iv) une deuxième étape de démétallisation permettant d'enlever les matériaux métalliques dont la masse spécifique est relativement élevée et du verre.

18. Procédé de recyclage selon la revendication 17, dans lequel ladite étape ii) d'agglomération des matières légères comprend une étape de récupération de matière qui diffère du matériau soufflé de synthèse conduit à ladite étape d'agglomération.

19. Procédé de recyclage selon la revendication 18, dans lequel ladite étape de récupération a lieu quand on amène la matière d'agglomération à s'écouler à travers un cyclone (105) au fond duquel on recueille et on transfère ledit matériau, qui diffère du matériau soufflé de synthèse, vers un séparateur centrifuge (112) au moyen d'une soupape étoile (108) et d'un moyen de stockage (109).

20. Procédé de recyclage selon la revendication 19, dans lequel ledit séparateur centrifuge (112) comprend un corps (113) en forme de cône comportant une ouverture supérieure raccourcie et une ouverture inférieure d'échappement, un rotor motorisé (116) en forme de cône qui est soutenu à rotation dans une position coaxiale dans ledit corps (113) en forme de cône, ledit rotor (116) présentant un angle de pointe supérieur à celui de la partie supérieure du corps (113) en forme de cône, des lames (117) étant disposées à la surface dudit rotor (116).

21. Procédé de recyclage selon la revendication 20, dans lequel ledit rotor (116) glisse longitudinalement.

22. Procédé de recyclage selon la revendication 17, dans lequel ladite deuxième étape de démétallisation comprend le traitement du matériau composite sur un moyen vibrant (124) de tamisage comprenant un plan vibrant (125), qui est mis en vibration par un moyen vibrant (126) donnant un mouvement de haut en bas avec une composante longitudinale et verticale au plan (125) et des orifices d'entrée (131', 131") permettant d'agglomérer dans la matière plastique de récupération de manière sensiblement sélective par rapport aux métaux dont la masse spécifique est relativement élevée et par rapport au verre.

23. Procédé de recyclage selon la revendication 22, dans lequel ledit plan vibrant (125) est divisé en deux parties longitudinales (125a, 125b) par une plaque (127), et dans lequel des cadres (129', 129") sont disposés sur ledit plan vibrant (125), dont on peut ajuster la distance par rapport audit plan vibrant (125) au moyen de vis d'ajustement (130), lesdits orifices d'entrée (131', 131") étant disposés sur lesdits cadres (129', 129").

24. Procédé de recyclage selon la revendication 14 ou 15, dans lequel ladite étape de nettoyage (c) de l'étape de récupération de matière plastique comprend le traitement de ladite matière dans un broyeur (208) comprenant un corps cylindrique (209) doté d'une ouverture de chargement par le haut et une ouverture d'échappement (210) qui est filtrée par un treillis calibré (230), à partir duquel le matériau traité est aggloméré au moyen de moyens appropriés de manutention (211), un support (212) sur lequel un ou plusieurs marteaux (218) sont montés sur charnières pivotantes en position neutre étant disposé à rotation dans ledit corps cylindrique (209).

25. Procédé de recyclage selon la revendication 24, dans lequel lesdits marteaux (218) se terminent par une dent (219) au niveau de l'extrémité distale, et dans lequel on place des nervures (220) sur la paroi intérieure du corps cylindrique (209), la distance entre les dents (219) et les nervures (220) étant inférieure à la taille moyenne du matériau à traiter.

26. Procédé de recyclage selon la revendication 24 ou 25, dans lequel ledit support (212) roule à 600 à 800 tours par minute et dans lequel un courant d'air froid est introduit dans ledit broyeur, le rapport du volume du matériau à traiter au volume d'air introduit valant 1/10.

27. Procédé de recyclage selon la revendication 15, dans lequel ladite étape de lavage (d) de ladite matière plastique brute de récupération comprend le lavage dudit matériau à l'eau et le séchage dudit matériau lavé dans des moyens centrifuges (303) comprenant un panier percé (304) à l'intérieur duquel un rotor (305), sur lequel se trouvent une pluralité de lames (306), est disposé à rotation dans une position coaxiale, lesdites lames (306) étant disposées en quinconce et présentant une de section en forme de coin, le côté oblique étant disposé vers le haut et le sommet se trouvant dans la direction de roulement du rotor (305).

28. Procédé de recyclage selon l'une quelconque des revendications 1 à 27, dans lequel ladite matière plastique de récupération est du polystyrène.

29. Procédé de recyclage selon l'une quelconque des revendications 1 à 28, dans lequel le produit composite qui fait l'objet du recyclage est soit un réfrigérateur soit un appareil similaire.
